# EUROPÄISCHE PATENTANMELDUNG

(11) **EP 1 701 530 A1**
(43) Veröffentlichungstag der Anmeldung: **13.09.2006**
(21) Anmeldenummer: 05004905.5
(22) Anmeldetag: 07.03.2005
(51) Int. Cl.: H04M 7/00, H04L 29/06

(54) **Verfahren und Einrichtung zur Bereitstellung eines VoIP-Sprachübermittlungsdienstes über ein MGCP-gesteuertes Zugangsendgerät**

(71) Anmelder: SIEMENS AKTIENGESELLSCHAFT, 80333 München (DE)
(72) Erfinder: Zygan, Renate, Dr., 81477 München (DE)
(74) Vertreter: Berg, Peter

(57) **Zusammenfassung**

Verfahren zur Bereitstellung eines Internet-Sprachübermittlungsdienstes (VoIP-Dienst) für einen Kommunikationsteilnehmer, dem ein Zugangsendgerät (3) und eine daran angeschlossene Fernsprechendeinrichtung (1) zugeordnet ist, wobei das Zugangsendgerät (3) über einen Kommunikationskanal (5) mit einem Netzzugangserver (4) verbunden ist und durch ein MGCP- basiertes Steuerungsprotokoll aus einem paketvermittelten Kommunikationsnetz (15) heraus gesteuert wird, mit folgenden Schritten:
- Herstellen einer Breitband-Verbindung auf dem Kommunikationskanal (5) zwischen dem Zugangsendgerät (3) und einem Netzzugangsserver (BRAS) (4), wobei während des Aufbaus der Breitband-Verbindung eine Identifizierungsinformation von dem Zugangsendgerät (3) an den Netzzugangserver (4) übermittelt wird,
- Authentifizieren des Zugangsendgerätes (3) durch den Netzzugangsserver (4) durch Auswerten der zuvor übermittelten Identifizierungsinformation.

## Beschreibung

### Technisches Gebiet

Die Erfindung betrifft ein Verfahren und eine Einrichtung zur Bereitstellung eines Internet-Sprachübermittlungsdienstes (VoIP-Dienst) für einen Kommunikationsteilnehmer, dem ein Zugangsendgerät und eine daran angeschlossene Fernsprechendeinrichtung zugeordnet ist, wobei das Zugangsendgerät über einen Kommunikationskanal mit einem Netzzugangserver verbunden ist und durch ein MGCP-basiertes Steuerungsprotokoll aus einem paketvermittelten Kommunikationsnetz heraus gesteuert wird.

### Stand der Technik

Unter "Voice over Internet Protokoll" (VoIP) wird allgemein die Übertragung von Sprache über paketvermittelte Datennetze auf der Basis des Internet-Protokolls (IP) verstanden. Ziel der sogenannten "Next Generation Networks" (NGN) ist die kostengünstige Übermittlung von Sprachinformationen über Datennetze mit möglichst vergleichbarer Qualität zu herkömmlichen Sprachnetzen (PSTN), wobei der Zugang für einen Endkunden möglichst einfach sein soll.

Um eine VoIP-Kommunikation herzustellen, muss ein Endkunde über eine IP-Verbindung verfügen. Eine ausreichende Sprach- und Dienstqualität lässt sich durch einen Breitbandzugang erzielen, dessen Bandbreite größer als 128 Kbit/s für Upstream und Downstream sein sollte. Will der Endkunde ein herkömmliches analoges Telefon für den VoIP-Dienst verwenden, so ist in der Regel im Anschlussbereich des Kunden ein Zugangsendgerät erforderlich, welches zwischen den unterschiedlichen Welten PSTN und IP vermittelt. Derartige Zugangsendgeräte besitzen die Funktionalität eines Gateways und werden in der Literatur auch als "Customer Premises Gateway" (CPG), oder allgemein als "Customer Premises Equipment" (CPE), als "Integrated Access Device" (IAD) oder kurz auch als Wandler bezeichnet.

Die Steuerung eines Zugangsendgerätes erfolgt über ein Steuerungsprotokoll aus dem paketvermittelten Kommunikationsnetz. Bei einem MGCP-gesteuerten Zugangsendgerät erfolgt die Sprachsteuerung durch das "Media Gateway Control Protocol" (MGCP-Protokoll). Das Protokoll MGCP ist mittlerweile ein Quasi-Standard, der ursprünglich jedoch nicht für kundenseitige Endgeräte, sondern für die Steuerung netzinterner Gateways konzipiert wurde. MGCP ist als RFC 3535 veröffentlicht und hat sich bis zur Standardisierung von H.248/Megaco weit verbreitet.

Im Gegensatz zum "Session Initiation Protocol" (SIP) bzw. dem ITU-T Standard H.323 sieht MGCP keine Funktionalität zur Registrierung oder Authentisierung eines Kommunikationsteilnehmers bzw. des durch dieses Protokoll gesteuerten Zugangsendgerätes vor. Eine Authentisierung ist aber erforderlich, wenn der Sprachdienstanbieter den VoIP-Dienst vergebühren will.

Das Protokoll MGCP geht davon aus, dass die Identifizierung und Authentisierung durch die unteren Kommunikationsebenen erfüllt wird. Der MGCP-Standard sieht hierfür explizit das "IP Security Protokol" (IPSec) vor. Die Verwendung von IPSec ist aber für den Einsatz im Massenmarkt ungeeignet, da sowohl durch die notwendige Infrastruktur zur Schlüsselverwaltung als auch durch das notwendige Verschlüsseln und Entschlüsseln der VoIP-Pakete hohe Kosten entstehen würden.

### Darstellungen der Erfindung

Es ist eine Aufgabe der vorliegenden Erfindung, ein Verfahren und eine Einrichtung zur Bereitstellung eines VoIP-Dienstes anzugeben, das für MGCP-gesteuerte Zugangsendgerät einsetzbar ist, das kostengünstig ist und das für den Einsatz im Massenmarkt geeignet ist.

Diese Aufgabe wird für ein Verfahren durch die Merkmale des Patentanspruchs 1 und für eine Einrichtung durch die Merkmale des Patentanspruchs 9 gelöst. Vorteilhafte Ausgestaltungen sind jeweils Gegenstand von abhängigen Ansprüchen.

Die Erfindung geht davon aus, dass die für MGCP-gesteuerte Zugangsendgeräte fehlende Registrierungs- und Authentisierungsfunktion dadurch geleistet werden kann, dass die im Zugangsendgerät vorhandene MGCP-basierte Sprach-Applikation mit einer, im Zugangsendgerät ebenfalls vorhandenen Internet-Zugangssoftware kombiniert wird. Gewissermaßen wird die bei MGCP fehlende Authentisierungsfunktionalität des Zugangsendgerätes ersetzt durch die Authentifizierung des Zugangsendgerätes (Users), die beim Aufbau der Breitband-Verbindung mittels der Internet-Zugangssoftware bereits durchgeführt wurde.

Der Hauptvorteil der Erfindung ergibt sich aus der Synergie zwischen dieser MGCP-basierten Sprach-Applikation mit standardisierter Internet-Zugangssoftware, die im MGCP-gesteuerten Zugangsendgerät ohnedies vorhanden ist. Im Ergebnis kann die für die Vergebührung der Sprach-Applikation erforderliche Authentisierung des Kommunikationsteilnehmers auch bei MGCP-gesteuerten Zugangsendgeräten auf einfache Weise realisiert werden. MGCP-gesteuerte Zugangsendgeräte sind dank der Erfindung für den Massenmarkt einsetzbar und ermöglichen die Abwicklung einer VoIP-Kommunikation über herkömmliche analoge Telefone, die an diese MGCP-gesteuerten Zugangsendgeräte angeschlossen sind.

Im Massenmarkt ist bekanntlich Internet-Zugangssoftware weit verbreitete. Als Beispiel sei hier das Point-to-Point-Protocoll-over-Ethernet" (PPPoE)(RFC 2516) genannt, das beispielsweise für die Nutzung eines "Asymmetric Digital Subscriber Line"-(ADSL)-Anschlusses verwendet wird. Das Betriebssystem Microsoft-Windows-XP enthält einen integrierten PPPoE-Client.

Von Vorteil ist, wenn die beim Aufbau der Breitband-Verbindung vom Zugangsendgerät an den Netzzugangserver übermittelte Identifizierungsinformation den logischen Namen (Domain Name) des Zugangsendgerätes enthält und dieser logische Name bei der Authentifizierung des dem Kommunikationsteilnehmer zugeordneten Zugangsendgerätes verwendet wird. Dadurch ist das Zugangsendgerät auch gegenüber dem Sprachserver authentifiziert.

Wenn der Netzzugangsserver die Authentifizierung selbst durchführt und an den Sprachserver nur VoIP-Datenpakete eines zuvor authentifizierten Nutzern weiterleitet, braucht der Sprachserver selbst keine weitere Authentifizierung mehr durchführen.

Zweckmäßig ist es, wenn beim Herstellen der Breitband-Verbindung eine standardisierte Punkt-zu-Punkt-Datenverbindung hergestellt wird. Ein derartiges PPP-Protokoll ist in der RFC 1661 veröffentlicht.

Ein besonderer Vorteil ergibt sich durch die Verwendung des PPPoE Protokolls, das durch RFC 2516 veröffentlicht und weit verbreitet ist.

Aus Sicherheitsgründen ist es günstig, wenn beim Herstellen der PPPoE-Verbindung eine Nutzerkennung übermittelt wird, die durch ein Passwort authentifiziert wird.

Durch die Erfindung ist es möglich, dass neben SIP-basierten VoIP-Endgeräten auch kostengünstige MGCP-gesteuerte IP-Zugangsendgeräte für den Massenmarkt einsetzbar sind.

### Kurzbeschreibung der Zeichnungen

Zur weiteren Erläuterung der Erfindung wird im nachfolgenden Teil der Beschreibung auf die Zeichnung Bezug genommen aus der weitere vorteilhafte Ausgestaltungen, Einzelheiten und Weiterbildungen der Erfindung zu entnehmen sind.
Es zeigt:

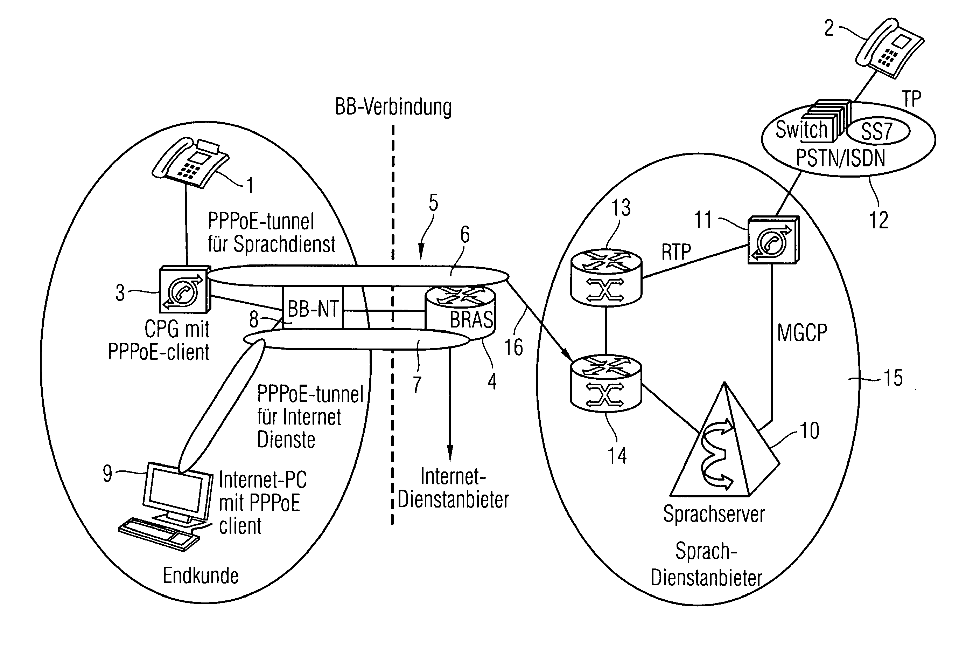

Figur 1 ein Netzszenario zur Darstellung der Authentifizierung eines MGCP-gesteuerten Zugangsendgerätes durch eine PPPoE-Zugangssoftware.

### Ausführung der Erfindung

Die Figur 1 zeigt beispielhaft ein Netzszenario anhand dessen weiter unten das erfindungsgemäße Verfahren zur Authentisierung eines MGCP-gesteuerten Zugangsendgerätes näher erläutert wird.

Die VoIP-Kommunikation führt von einer Fernsprecheinrichtung 1 eines Endkunden über eine Breitband-Ethernet-Verbindung (BB-Verbindung) 5 und über ein paketvermitteltes Kommunikationsnetz 15 zu einem Telefon 2 eines zweiten Kommunikationsteilnehmers.

Zunächst werden die in Figur 1 dargestellten Netzwerkkomponenten näher beschrieben.

Im linken Teil der Zeichnung sind Kommunikationseinrichtungen in einem Kreis zusammengefasst, die sich in der Sphäre eines Endkunden befinden. Der Endkunden verfügt im dargestellten Beispiel über ein herkömmliches analoges Telefon 1, eine Zugangsendeinrichtung 3 und über einen Internet-PC 9. Das analoge Telefon 1 ist mit einem Zugangsendgerät 3 ("Customer Premises Gateway" in Figur 1 auch mit "CPG mit PPPoE Client" bezeichnet) verbunden. Das Zugangsendgerät 3 kann als "Heim-Gateway" angesehen werden, das nicht zum Netz des Dienstanbieters gehört. Es ist in der Regel seitens des Netzbetreibers nicht administrierbar, vergleichsweise zu einem Gateway einfach aufgebaut und billig herzustellen. Es besitzt Funktionalitäten eines Gateways, das heißt im CPG ist eine Software (Sprach-Applikation) vorhanden, welche unter anderem die vom Telefon 1 kommenden analogen Signale in IP-Pakete umsetzt, die später im Internet transportiert werden. Diese Software steuert die Funktion das Telefon 1. Wie später noch genauer erläutert wird, ist die im CPG vorhandene Sprachapplikation eng gekoppelt mit der Internet-Zugangssoftware im CPG.

Das Zugangsendgerät 3 ist über einen Breitbandnetzabschluss 8 (BB-NT) der Breitband-Verbindung 5 mit einem Netzzugangserver 4 ("Broad Band Remote Access Server" im Folgenden kurz BRAS) verbunden. Die Breitband-Verbindung 5 zwischen der Breitbandabschlusseinrichtung (BB-NT) 8 und dem Netzzugangserver 4 kann unterschiedliche Übertragungstechnologien, wie beispielsweise "Digital Subscriber Line" (DSL) oder "Asynchronous Transfer Modus"(ATM) verwenden.

Die Software, die für die Herstellung des Internet-Zugangs verwendet wird, ist in beiden Geräten, d.h. im CPG 3 und im Internet-PC 9, das "Point-to-Point-Protocoll-over-Ethernet" (PPPoE) .

Der Netzzugangserver 4 gehört zum Breitbandzugangsnetz. Ein Netzbetreiber kann gleichzeitig Zugangsnetzbetreiber und Dienstanbieter für Sprache und/oder Internet-Zugang sein. Durch einen Pfeil 16 ist in Figur 1 die Verbindung des Netzzugangservers 4 (BRAS) mit einem Router 14 des paketvermittelten Kommunikationsnetzes 15 angedeutet. Im paketvermittelten Kommunikationsnetz 15 wird über MGCP-Verbindungen und über den Sprachserver 10 der Fluss der VoIP-Sprachpakete zu einem Gateway 11 gelenkt. Am Gateway 11 ist ein herkömmliches leitungsvermitteltes Kommunikationsnetz 12 (PSTN/ISDN) angeschlossen. Das Telefon 2 des zweiten Kommunikationsteilnehmers ist mit diesem PSTN/ISDN-Sprachnetz über eine Teilnehmeranschlussleitung verbunden. Der Vollständigkeit der Darstellung wegen ist in Figur 1 im paketvermittelten Kommunikationsnetz 15 auch ein Router 13 eingezeichnet, der über das "Realtime Transport Protokoll" (RTP) mit dem Router 14 und dem Gateway 11 Datenpakete austauscht.

Der Sprachserver 11 ist im dargestellten Ausführungsbeispiel eine Kommunikationsplattform des Typs SURPASS hiE 9200 der Firma Siemens. Diese Kommunikationsplattform 11 verbindet im Netz 15 des Sprachdienstanbieters die beiden unterschiedlichen Welten TDM und IP-basierte Next Generation Networks (NGT). Sie unterstützt standardisierte Protokolle für TDM-und VoIP- Netzszenarien, darunter SS7, SS7oIP, INAP, H.248(Megaco), MGCP, H.323.SIP-T, SIP, etc. Die Kommunikationsplattform 11 stellt über diese genannten standardisierten Protokolle für heimische Geräte wie CPGs und IADs so genannte "call feature server functions" bereit.

Mit dem Bezugszeichen 6 ist in Figur 1 ein Tunnel zwischen dem Zugangsendgerät 3 (CPG) und dem Netzzugangserver 4 (BRAS) bezeichnet. Der Tunnel 6 ist ein PPPoE-tunnel für Sprachdienste. Hierzu parallel verläuft über die Breitband-Verbindung 5 ein zweiter Tunnel 7. Dieser bildet einen PPPoE-tunnel für Internet-Dienste. Er verbindet den Internet-PC 9 des Endkunden mit dem BRAS im Zugangsnetz. Für beide PPPoE-Verbindungen bildet der Netzzugangsserver 4(BRAS) jeweils einen Endpunkt einer PPP-Verbindung.

Im Folgenden wird nun der Ablauf bei der Authentifizierung des Zugangsendgerätes 3 erläutert.

Immer dann, wenn ein Endgerät, d.h. entweder das CPG 3 oder der Internet PC 9 des Endkunden, einen Tunnel (d.h. einen Breitbandkommunikationskanal) zum BRAS 4 aufbaut, ist damit eine Authentifizierung dieses Endgerätes (User) verbunden. Für den VoIP-Dienst bedeutet dies, bevor ein Gespräch aufgebaut werden kann muss der PPPoE-Tunnel bereits stehen. Damit ist aber die User-Authentifizierung für den Internet-Sprachübermittlungsdienst bereits geleistet. Sie wird gemäß der Erfindung für die VoIP-Kommunikation genützt, da das Zugangsendgerät (CPG) 3 einen Endpunkt der MGCP-Signalisierung bildet. Aus dem Zusammenwirken der im Zugangsendgerät 3 vorhandenen MGCP-basierten Sprach-Applikation mit der im Zugangsendgerät 3 ebenfalls installierten Internet-Zugangssoftware (PPPoE) ergibt sich ein vorteilhafter synergetischer Effekt: Der Sprachserver 10 muss keine eigene Authentisierung des Endkunden (Figur 1) mehr durchführen, da diese bereits beim Aufbau der Verbindung durch den Netzzugangserver 4 schon geleistet wurde.

Wie bereits oben erwähnt, führt über die Breitband-Verbindung 5 auch der Informationsfluss (Tunnel 7) des kundenseitigen Internet-PC's 9, der aber nicht Gegenstand der vorliegenden Erfindung ist. Entscheidend für die Erfindung ist, dass der Tunnel 6 zwischen CPG 3 und BRAS 4 (PPP-tunnel für Sprachdienst) für VoIP-Authentifizierungszwecke herangezogen wird.

Der Sprachserver 10 kann sich auf die standardmäßig gemachte Authentisierung des BRAS 4 verlassen. Mit Vorteil nutzt also die Erfindung die bereits existierende Infrastruktur des Breitband-Internet-Zugangs (PPPoE) für die Identifizierung und Authentisierung eines VoIP-Kommunikationsteilnehmers.

Von Vorteil ist auch, dass an das Teilnehmerzugangsnetz nur dieselben Anforderungen gestellt werden, wie sie für den schnellen Internet-Zugang auch erforderlich sind. Der über das MGCP-gesteuerte Zugangsendgerät angebotene VoIP-Dienst ist ebenso wie der Internet-Zugang im Massenmarkt ein Best-Effort-Dienst.

Der Netzzugangserver 4, der die PPPoE Verbindung terminiert, sendet an den Sprachserver 10 nur Pakete eines authentifizierten Kommunikationsteilnehmers weiter. Es liegt in der Hand des Netzbetreibers sicherzustellen, dass die Übertragung der Datenpakete zwischen dem Netzzugangserver 4 und dem Sprachserver 10 durch Standardverfahren sicher ist, das heißt, dass eine missbräuchliche Manipulation ausgeschlossen werden kann. Für die Vergebührung der VoIP-Verbindung kann sich der Sprachserver 10 auf die vom Netzzugangserver 4 durchgeführte Authentisierung verlassen, da dieser die Authentisierung bereits beim Aufbau der Breitband-Verbindung durchgeführt und auch überprüft hat. Eine zusätzliche Authentisierung, z.B. über IPSec, ist nicht erforderlich.

Die oben beschriebenen Netzeinheiten, wie Sprachserver, Gateway, Netzzugangserver und Router sind selbstverständlich nicht eingeschränkt auf eine physikalische Baueinheit zu verstehen, sondern es ist dem einschlägigen Fachmann klar, dass unter diesen Begriffen jeweils eine Funktionalität zu verstehen ist. Diese kann ganz oder teilweise auf mehreren physikalischen Einrichtungen in Netz verteilt angeordnet sein. Die einzelnen Komponenten sind vorteilhaft durch Software realisiert. Es kann aber auch sein, dass zumindest Teile durch Hardware bzw. durch Firmware gebildet sind.

Zusammenstellung der verwendeten Bezugszeichen
- 1: Fernsprechendeinrichtung eines ersten Kommunikationsteilnehmers
- 2: Fernsprechendeinrichtung eines zweiten Kommunikationsteilnehmers
- 3: Zugangsendgerät (CPG), Heim-Gateway
- 4: Netzzugangserver (BRAS)
- 5: Kommunikationskanal, Breitband-Verbindung
- 6: Tunnel zwischen Zugangsendgerät und Netzzugangsserver
- 7: Tunnel zwischen Internet-PC und Netzzugangsserver
- 8: Breitbandabschlusseinrichtung (BB-NT)
- 9: Internet-PC
- 10: Sprachserver, Kommunikationsplattform
- 11: Gateway
- 12: leitungsvermitteltes Kommunikationsnetz (PSTN/ISDN)
- 13: Router
- 14: Router
- 15: paketvermitteltes Kommunikationsnetz
- 16: Pfeil

## Patentansprüche

1. Verfahren zur Bereitstellung eines Internet-Sprachübermittlungsdienstes (VoIP-Dienst) für einen Kommunikationsteilnehmer, dem ein Zugangsendgerät (3) und eine daran angeschlossene Fernsprechendeinrichtung (1) zugeordnet ist, wobei das Zugangsendgerät (3) über einen Kommunikationskanal (5) mit einem Netzzugangserver (4) verbunden ist und durch ein MGCP-basiertes Steuerungsprotokoll aus einem paketvermittelten Kommunikationsnetz (15) heraus gesteuert wird, mit folgenden Schritten:
- Herstellen einer Breitband-Verbindung auf dem Kommunikationskanal (5) zwischen dem Zugangsendgerät (3) und einem Netzzugangsserver (BRAS) (4), wobei während des Aufbaus der Breitband-Verbindung eine Identifizierungsinformation von dem Zugangsendgerät (3) an den Netzzugangserver (4) übermittelt wird,
- Authentifizieren des Zugangsendgerätes (3) durch den Netzzugangsserver (4) durch Auswerten der zuvor übermittelten Identifizierungsinformation.

2. Verfahren nach Anspruch 1, **dadurch gekennzeichnet dass** die Identifizierungsinformation den logischen Namen (Domain Name) des Zugangsendgerätes (3) enthält und dieser logische Name bei der Authentifizierung des Kommunikationsteilnehmers verwendet wird.

3. Verfahren nach Anspruch 1 oder Anspruch 2, **dadurch gekennzeichnet, dass** der Netzzugangserver (4) an einen Sprachserver (10) nur Datenpakete eines zuvor authentifizierten Kommunikationsteilnehmers weiterleitet.

4. Verfahren nach einem der Ansprüche 1 bis 3, **dadurch gekennzeichnet, dass** beim Herstellen der Breitband-Verbindung zwischen dem Zugangsendgerät (3) und dem Netzzugangserver (4) eine logische Punkt-zu-Punkt-Datenverbindung (PPP) aufgebaut wird.

5. Verfahren nach Anspruch 4, **dadurch gekennzeichnet, dass** zur Herstellung der logische Punkt-zu-Punkt-Datenverbindung (PPP) das PPPoE Protokol verwendet wird.

6. Verfahren nach Anspruch 5, **dadurch gekennzeichnet, dass** beim PPPoE-Verbindungsaufbau eine Nutzerkennung übermittelt wird, die durch ein Passwort authentifiziert wird.

7. Verfahren nach einem der vorstehenden Ansprüche, **dadurch gekennzeichnet, dass** die Fernsprechendeinrichtung (1) ein herkömmliches Telefon ist.

8. Verfahren nach einem der vorstehenden Ansprüche, **dadurch gekennzeichnet, dass** die Breitband-Verbindung durch den Netzzugangserver (4) terminiert wird.

9. Einrichtung zur Bereitstellung eines Internet-Sprachübermittlungsdienstes, der über eine Kommunikationsplattform (10), die in einem paketvermittelten Kommunikationsnetz (15) angeordnet ist, geführt ist, mit einem Netzzugangserver (4) der durch einen Kommunikationskanal (5) mit einem, einem Kommunikationsteilnehmer zugeordneten Zugangsendgerät (3) verbunden ist, wobei das Zugangsendgerät (3) durch ein MGCP-basiertes Steuerungsprotokoll aus dem Kommunikationsnetz (15) gesteuert wird, **dadurch gekennzeichnet, dass** das Zugangsendgerät (3) über den Kommunikationskanal (5) eine Breitband-Verbindung zum Netzzugangserver (4) aufbaut und dabei eine Identifizierungsinformation übermittelt, welche der Netzzugangserver (4) zur Authentifizierung des Zugangsendgerätes (3) verwendet.

10. Einrichtung nach Anspruch 9, **dadurch gekennzeichnet, dass** die Identifizierungsinformation den logischen Namen (Domain Name) des Zugangsendgerätes (3) enthält und dieser logische Name bei der Authentifizierung des Kommunikationsteilnehmers verwendet wird.

11. Einrichtung nach Anspruch 9 oder 10, **dadurch gekennzeichnet, dass** der Netzzugangserver (4) an die Kommunikationsplattform (10) nur Datenpakete eines zuvor authentifizierten Kommunikationsteilnehmers weiterleitet.

12. Einrichtung nach einem der Ansprüche 9 bis 11, **dadurch gekennzeichnet, dass** beim Herstellen der Breitband-Verbindung zwischen dem Zugangsendgerät (3) und dem Netzzugangserver (4) eine logische Punkt-zu-Punkt-Datenverbindung (PPP) aufgebaut wird.

13. Einrichtung nach Anspruch 12, **dadurch gekennzeichnet, dass** die Punkt-zu-Punkt-Datenverbindung (PPP) eine PPPoE Verbindung ist.

14. Einrichtung nach einem der Ansprüche 9 bis 13, **dadurch gekennzeichnet, dass** die Fernsprechendeinrichtung ein herkömmliches analoges Telefon ist.
